(19) Europäisches Patentamt
European Patent Office
Office européen des brevets

(11) Publication number: **0 095 975**
**B1**

(12) **EUROPEAN PATENT SPECIFICATION**

(45) Date of publication of patent specification: **09.10.85**

(51) Int. Cl.$^4$: **C 10 L 1/22,** C 09 B 1/32

(21) Application number: **83401041.5**

(22) Date of filing: **25.05.83**

# (54) Concentrated solutions of 1,4-dialkyl-arylamino-anthraquinone dyestuffs for the colouring of petroleum products.

(30) Priority: **27.05.82 IT 2150682**

(43) Date of publication of application:
**07.12.83 Bulletin 83/49**

(45) Publication of the grant of the patent:
**09.10.85 Bulletin 85/41**

(84) Designated Contracting States:
**BE DE FR GB NL**

(56) References cited:
**DE-A-3 019 136**
**GB-A-1 108 981**
**GB-A-1 126 704**

(73) Proprietor: **PIGMENTI ITALIA S.p.A.**
**Via Marconato, 8**
**I-20031 Cesano Maderno (Milano) (IT)**

(72) Inventor: **Marangelli, Ugo**
**29 Via San Dalmazio**
**Saronno (Varese) (IT)**
Inventor: **Ciocci, Giancarlo**
**79/A Via A. Frua**
**Saronno (Varese) (IT)**
Inventor: **Papa, Sisto Sergio**
**145, Viale Zara**
**Milan (IT)**

(74) Representative: **Hirsch, Marc-Roger**
**34 rue de Bassano**
**F-75008 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 095 975 B1**

**Description**

The present invention refers to concentrated solutions of 1.4-dialkyl-arylamino-anthraquinone dyestuffs (herein-after called "dyes") suitable for the coloring of petroleum products and industrial organic solvents.

The colouring of the industrial organic solvents and of the petroleum products such as, for instance gasoline, kerosene, gas oil, is carried out in order to render them identifiable, and thus make difficult the possible tax evasions, which can result from utilizing said products for purpose that differ from the ones for which they are taxed. The colouring material, in order that it may be used in the colouring of fuels, must satisfy various requirements, i.e. among other:

1) possess a high dyeing power;

2) have a sufficient solubility in the solvents and in the fuels whether or not antiknock agents have been added;

3) have a high diffusion index;

4) contain little or no by-product insoluble in fuels;

5) leave only a minimum deposit of sludge in the engines;

6) have a proper fastness to light during storage;

7) be compatible with additives and not cause difficulties during combustion;

8) be brittle but not powderous in the solid form;

9) be sufficiently fluid to be solubilized in organic solvents, if it is used in the form of a concentrated solution.

The use in the form of concentrated solution allows considerable advantages with respect to powdery products:

a) easiness of use,

b) rapidity of dosage;

c) high diffusion coefficient;

d) absence of powders.

All these characteristics, although necessary, are, however, not sufficient for the choice of the suitable dye, since the dye must primarily be extractable with difficulty from the system in which it is dissolved.

Anthraquinonic dyes, employable for the colouring of the petroleum products are known from the literature, such as, for instance, U.S. patent 2,211,943; U.S. patent 2,925,333; U.S. patent 3,164,499, however, they hardly succeed in satisfying the above listed requisites and in particular present on the one hand a limited solubility in the organic solvent and the other hand non-extractability characteristics, that are inadequate in many cases.

The anthraquinonic dyes for fuels having the following structures, are particularly known in the art:

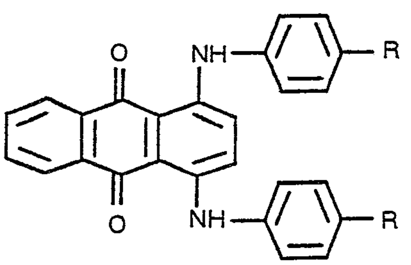

where $R = H, CH_3$

(Solvent Blue 76, Solvent Green 3/C.I. 61565)

(I)

However, the solubility of these dyes in the various solvents is very limited, chiefly with regard to the obtention of concentrated solutions, which should also be sufficiently stable at low temperatures; therefore such dyes only find use as powders.

Furthermore, they are easily extractable from the system. Now it has been found that it is possible to colour permanently petroleum products and industrial organic solvents, overcoming the above drawbacks that are shown by the known anthraquinonic dyes, by using concentrated solutions of anthraquinonic dyes comprising, in particular, alkyl-arylamino groups.

Therefore, the present invention concerns concentrated colouring solutions of blue-green tone for petroleum products and organic solvents, consisting of a diluent organic phase and of from 30 to 50% by weight of an anthraquinonic compound or of a mixture of anthraquinonic compounds having the general formula:

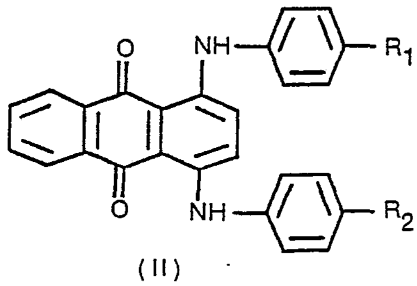

(II)

wherein:

$R_1$ and $R_2$, equal to or different from each other, represent alkyl radicals having from 8 to 20 carbon atoms.

The diluent organic phase consists of one or more organic solvents such as, for instance, alpha-chloronaphthalene, alpha and beta methylnaphthalene, alpha-bromonaphthalene, dichloro-benzene, trichlorobenzene, xylene, toluene, nitrobenzene, para-nonylphenol and aliphatic alcohols.

In fact, it has been found that the anthraquinonic dyes of general formula II, according to the invention, besides answering the various requisites that dyes for fuels must meet, present unexpected characteristics of high solubility in the above cited organic solvents, so that it is possible to employ said dyes in the form of concentrated solutions, which are also sufficiently stable at low temperatures.

Furthermore, it has been found that the dyes of formula II, according to the invention, present surprising characteristics of difficult extractability from the fuels and in particular they appear remarkably less extractable than homologous known dyes of formula I.

In practice, solutions in fuels of the dyes of the invention of formula II, have shown, when treated with quantities of silica gel ranging from 120 to 25 gr. per litre fuel, an extractability of 16 to 50% lower than that, showed by analogous solutions in fuels of the dyes of formula I. The concentrated solutions of dyes, according to the invention, are prepared by reacting quinizarin of leucoquinizarin or mixtures thereof and one or more para-alkylanilines in the presence of or after subsequent addition of the above mentioned organic solvents.

The use of a mixture of para-alkylanilines in the synthesis of the dyes allows the formation of a mixture of dyes of formula II, comprising both symmetrical derivatives ($R_1$ equal to $R_2$) and asymmetrical derivatives ($R_1$ different from $R_2$).

The dye mixture thus obtained shows a higher solubility in the organic solvents, with respect to the dye obtained from a single para-alkylaniline.

The synergic solubilizing effect of the dye mixture is such that said mixtures appear in an oily or semioily form, which allows to obtain dye solutions having a high concentration in the above mentioned organic solvents. Concentrated dye solutions, ready-to-use and particularly advantageous are prepared by condensing the hydroxyanthraquinones with the mixture of chosen para-alkylanilines, ending with the oxidation "in situ" of the still present leucoderivatives by means of nitrobenzene or of organic compounds of similar characteristics and with the dilution of the reaction bulk with one or more organic solvents, followed by an aqueous extraction of the present inorganic salts and a final anydrification. A further advantage of the dyes of the invention, with respect to the known dyes of formula I, resides in the lower toxicity of the para-alkylanilines having an aliphatic chain with a high number of atom carbon (8 to 20), used in the synthesis of said dyes of formula II, with respect to the aniline or the para-toluidine used in the synthesis of the dyes of formula I.

The following examples are given to better illustrate the invention, without limiting, however, its scope.

### Example No. 1

0.1 moles of quinizarin, 0.05 moles of leuco-quinizarin, 0.675 moles of boric acid, 0.45 moles of n-dodecylaniline, 75 g of isobutanol were heated to boiling point (105°C) during several hours.

The whole was cooled to room temperature.

100 g of xylene were added.

Several washings were carried out by using 100 g of water at a time; after decantation, the aqueous layer was separated.

250 g of a blue color concentrated solution containing 40% by weight of dye was obtained.

### Example No. 2

0.1 moles of quinizarin, 0.05 moles of leuco-quinizarin, 0.675 moles of boric acid, 0.60 moles of a mixture ($C_{10}$—$C_{18}$) of para-alkylanilines were heated to 165°C for 10 hours.

The whole was cooled to room temperature.

60 g of mixture of toluene/p-nonylphenol were added.

Some washings were carried out by using 100 g of water at a time; after decantation, the aqueous layer was separated.

300 g of a mixture of blue dyes in concentrated solution containing 30% of dyes was obtained.

Example No. 3

0.15 moles of leuco-quinizarin, 0.675 moles of boric acid, 0.45 moles of n-dodecylaniline, 75 g of is obutanol were heated to boiling temperature (105°C) for 10 hours. 0.075 moles of nitrobenzene were added and the temperature was kept at 110°C for further 4 hours.

The whole was cooled to room temperature.

100 g of a mixture of alpha/beta-methylnaphthalene were added. Several washings were carried out by using 100 g of water at a time; after one decantation the aqueous layer was separated.

250 g of a blue color concentrated solution, containing 40% of dye was obtained.

Example No. 4

0.1 moles of quinizarin, 0.05 moles of leuco-quinizarin, 0.675 moles of boric acid, 0.45 moles of a mixture ($C_{10}$—$C_{18}$) of para-alkylanilines, 75 g of isobutanol were heated to boiling temperature (105°C) for 10 hours.

The whole was cooled to room temperature.

140 g of xylene were added.

Several washings were carried out by using 100 g of water at a time; after decantations the aqueous layer was separated.

300 g of a mixture of blue color concentrated solution containing 30% of dyes were obtained.

Example No. 5

0.15 moles of leuco-quinizarin, 0.675 moles of boric acid, 0.45 moles of a mixture ($C_{10}$—$C_{18}$) of alkylanilines, 75 g of isobutanol were heated to boiling temperature (105°C) for 10 hours.

0.075 moles of nitrobenzene were added and the temperature was kept at 110°C for further 4 hours. The whole was cooled to room temperature.

50 g of a mixture of alpha-/beta-methylnaphthalene were added.

Several washings were carried out by using 100 g of water at a time; after decantation the aqueous layer was separated.

200 g of a mixture of blue color concentrated solution containing 50% of dyes were obtained.

**Claims**

1. Concentrated colouring solutions of blue-green tone for liquid petroleum products and organic solvents consisting of an organic diluent phase and of from 30 to 50% by weight of an anthraquinonic compound or of a mixture of anthraquinonic compounds having general formula:

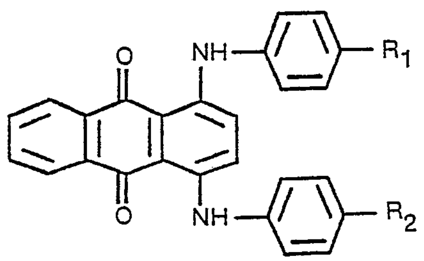

wherein:

$R_1$ and $R_2$, equal to or different from each other, represent alkyl radicals having from 8 to 20 carbon atoms, obtained by reacting quinizarin or leuco-quinizarin or mixtures thereof with one or more para-alkylanilines.

2. Concentrated solutions, according to claim 1, wherein the organic diluent phase consists of one or more solvents selected from the group consisting of alpha- and beta-methylnaphthalene, para-nonylphenol, nitrobenzene, toluene, xylene, aliphatic alcohols.

3. Petroleum products and solvents, when coloured with colouring concentrated solutions, as claimed in the herein above preceding claims.

**Patentansprüche**

1. Blau-grüne konzentrierte Färblösungen für flüssige Erdöl-produkte und organische Lösungsmittel, bestehend aus einer organischen Verdünnungsmittelphase und 30 bis 59 Gew.-% einer Anthraquinoninverbindung oder eines Gemisches von Anthraquinoninverbindungen der allgemeinen Formel:

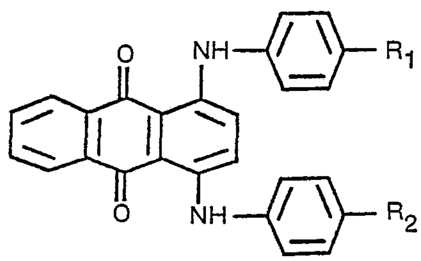

worin:

$R_1$ und $R_2$, die gleich oder verschieden sind, 8 bis 20 Kohlenstoffatome enthaltende Alkylgruppen darstellen,

die durch Reaktion von Quinizarin oder Leukoquinizarin bzw. Gemischen derselben mit einem oder mehreren Para-Alkylanilinen erzeugt sind.

2. Konzentrierte Lösungen nach Anspruch 1, bei denen die organische Verdünnungsmittelphase aus einem oder mehreren Lösungsmitteln der Gruppe alpha- bzw. beta-Methylnaphthalin, Para-Nonylphenol, Nitrobenzol, Toluol, Xylol und aliphatischen Alkoholen besteht.

3. Vermittels in den vorhergehenden Ansprüchen beanspruchten konzentrierter Färblösungen gefärbte Erdölprodukte und Lösungsmittel.

**Revendications**

1. Solutions colorantes concentrées de coloration bleu-verdâtre pour produits pétroliers liquides et solvants organiques, formées d'une phase de diluant organique et de 30% à 50% en poids d'un composé anthraquinonique ou d'un mélange de composés anthraquinoniques ayant la formule générale:

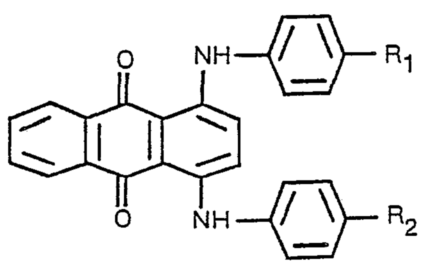

dans laquelle:

$R_1$ et $R_2$, identiques ou différents l'un de l'autre, représentent des radicaux alkyles renfermant 8 à 20 atomes de carbone,

obtenus par réaction de quinizarine ou de leuco-quinizarine ou de leurs mélanges avec une ou plusieurs para-alkylanilines.

2. Solutions concentrées selon la revendication 1, dans lesquelles la phase de diluant organique est formée d'un ou plusieurs solvants choisis dans le groupe constitué l'alpha- et le béta-méthylnaphtalène, le para-nonylphényl, le nitrobenzène, le toluène, le xylène et des alcools aliphatiques.

3. Produits pétroliers et solvants colorés à l'aide de solutions colorantes concentrées telles que revendiquées dans les revendications précédentes.